# DEMANDE DE BREVET EUROPEEN

(11) **EP 2 738 734 A1**
(43) Date de publication de la demande: **04.06.2014**
(21) Numéro de dépôt: 13195185.7
(22) Date de dépôt: 29.11.2013
(51) Int. Cl.: G06Q 50/06, H04L 12/10, H04L 12/28

(54) **Tableau électrique intelligent à courant faible continu**

(30) Priorité: 30.11.2012 FR 1261472
(71) Demandeur: Electricité de France, 75008 Paris (FR)
(72) Inventeur: Pignier, Daniel, 92340 BOURG LA REINE (FR); Menga, David, 91370 VERRIERES LE BUISSON (FR)
(74) Mandataire: Cabinet Plasseraud

(57) **Abrégé**

L'invention concerne un tableau électrique (TE) comportant au moins une pluralité de disjoncteurs pour alimenter électriquement des réseaux filaires numériques (RF1...RFN) de communication et d'alimentation électrique. Les réseaux filaires sont adaptés à la fois à la transmission de données numériques avec des appareils connectés (AP1..AP10) auxdits réseaux filaires et à l'alimentation électrique desdits appareils connectés selon un courant faible et continu. Chacun des disjoncteurs est relié à :
o une connexion d'alimentation (CE) pour recevoir une alimentation électrique en provenance d'une source électrique (SRC) ;
o un ou plusieurs départs (D1...DN) vers les réseaux filaires (RF1...RFN) ; et
o une unité de traitement électronique (UTE1, UTE2, UTE3) adaptée pour envoyer et recevoir sur les départs (D1...DN) des données numériques desdits réseaux filaires (RF1...RFN).

## Description

La présente invention concerne le domaine des installations électriques, et plus particulièrement un tableau électrique apte à communiquer et à fournir une alimentation électrique à des équipements bruns par l'intermédiaire d'une même liaison filaire.

Les fournisseurs d'énergie électrique proposent à des consommateurs d'électricité abonnés, des compteurs et tableaux électriques pouvant être munis d'une électronique de gestion. Cette électronique de gestion est notamment prévue pour que l'abonné puisse suivre, gérer et optimiser sa consommation, et ce même à distance via un accès administrateur mis à disposition sur Smartphone, ordinateur, tablette numérique ou autre. Par ailleurs, les données relatives aux consommations instantanées ou prévisionnelles des abonnés peuvent être communiquées par l'électronique de gestion au fournisseur d'énergie afin de réguler une production d'énergie électrique.

L'électronique de gestion, intégrée au compteur, au tableau ou répartie entre ces deux derniers, mesure généralement une consommation globale de l'installation électrique de l'abonné. Dès lors, il est possible d'identifier la consommation inhérente au fonctionnement d'équipements à consommation électrique élevée tels que le chauffage, la machine à laver, le réfrigérateur ou autre. Cette identification peut être effectuée selon des moyens connus, par exemple via une reconnaissance de signature de consommation d'équipement électrique, ou via un moyen de mesure en consommation associé à un ou plusieurs des équipements de l'abonné.

Or, selon ces moyens connus, l'électronique de gestion n'est pas en mesure de relever avec une précision satisfaisante la consommation d'équipements bruns, tels que des capteurs, des lampes LED, des chargeurs d'équipements mobiles (téléphone, tablette numérique, etc.) ou autre. En ce sens, leur consommation est relativement faible et réalisée à différentes périodes de durée variée. L'impact de leur consommation sur la courbe de charge générale est trop mineur et aléatoire pour pouvoir identifier distinctement leur signature de consommation. Une solution de mesure fidèle en consommation pour de tels équipements peut consister à attribuer des moyens de mesure à chacun des équipements. Ainsi, chaque moyen de mesure tend à relever précisément la consommation d'un équipement brun. Toutefois, cette solution implique la multiplication des moyens à installer chez l'abonné, augmentant de fait les coûts du système de suivi en consommation et les contraintes d'installation.

Avec les développements technologiques, l'utilisation d'équipements bruns tend à augmenter au sein des logements d'abonnés : téléphones, imprimantes, téléviseurs, équipements de surveillance, tablettes numériques, lampes intelligentes, modem internet, etc. Quand bien même ces équipements consomment peu d'électricité en comparaison d'un poste de consommation tel que le chauffage, la multiplicité de ces équipements engendre finalement une consommation non négligeable pour les consommateurs. A ce titre, il existe un réel besoin pour le consommateur de contrôler et suivre précisément la consommation de ses équipements bruns afin d'optimiser sa consommation électrique.

En outre, les équipements bruns comportent des circuits d'alimentation ou moyens de stockage d'énergie électrique tels que des batteries, à alimenter selon un courant continu. Seulement, sur une installation électrique classique, l'alimentation électrique est fournie en courant alternatif. Aussi, pour un bon fonctionnement des équipements bruns, ceux-ci disposent traditionnellement d'un convertisseur AC/DC sur leur câble d'alimentation et/ou au sein même de l'équipement. La présence du convertisseur vient augmenter le coût de l'équipement et aussi sa consommation en électricité, laquelle consommation est inhérente en partie à l'effet Joule de la transformation électrique des convertisseurs. En vue de diminuer la consommation des équipements et leur coût de fabrication, il existe un besoin de se passer de convertisseur.

De surcroît, la production autonome d'énergie pour les logements tend à se développer avec des sources d'énergie électrique alternative de type éolien, photovoltaïque, thermique ou autre. Ces technologies produisent une énergie électrique en courant continu, utilisable par un abonné pour sa propre installation électrique ou pouvant être cédé à un fournisseur d'énergie électrique en échange d'une rétribution. Pour alimenter une installation électrique, ce courant est généralement transformé en courant alternatif à destination du tableau électrique courant fort du logement. Ensuite, le courant alternatif obtenu est à nouveau transformé en courant continu par les convertisseurs des équipements bruns, comme ceux précités.

Or, le courant continu issu des sources d'énergie électrique alternative est approprié pour une alimentation directe des équipements sans les transformations successives susmentionnées. Il existe donc un besoin d'alimentation directe des équipements selon une alimentation continue fournie par des sources électriques alternatives, sans passer par une transformation en courant alternatif.

La présente invention vient améliorer la situation.

L'invention propose un tableau électrique alimentant directement au moins un appareil connecté. L'alimentation est fournie selon un courant faible continu, à une alimentation prescrite, pour au moins un des appareils connectés, ceci par l'intermédiaire d'une liaison filaire numérique avec laquelle le tableau électrique communique aussi des données à l'au moins un appareil connecté. L'alimentation procurée par le tableau électrique est sécurisée électriquement de sorte à préserver l'installation de toute avarie électrique.

A cet effet, le tableau électrique comporte au moins une pluralité de disjoncteurs, chacun des disjoncteurs étant relié à :
- une connexion d'alimentation pour recevoir une alimentation électrique en provenance d'une source électrique ;
- un ou plusieurs départs vers des réseaux filaires numériques de communication et d'alimentation électrique, lesquels réseaux filaires sont adaptés à la fois à la transmission de données numériques avec des appareils connectés aux réseaux filaires et à l'alimentation électrique des appareils connectés ; et
- une unité de traitement électronique adaptée pour envoyer et recevoir sur les départs des données numériques des réseaux filaires.

Plus particulièrement, les disjoncteurs alimentent électriquement les réseaux filaires selon un courant faible et continu.

Ainsi, le au moins un disjoncteur sécurise l'alimentation directe fournie à l'appareil connecté selon un courant faible et continu. L'appareil étant directement alimenté selon un courant continu, on comprend que l'utilisation d'un convertisseur AC/DC n'est plus nécessaire. En cas d'anomalie de type surintensité et/ou court-circuit, le disjoncteur se place dans une position de sécurité, par exemple en coupant toute alimentation électrique du départ associé à l'appareil concerné. Ainsi, l'installation électrique est préservée en cas de dysfonctionnement de d'alimentation électrique.

Par ailleurs, l'unité de traitement électronique permet, pour une même liaison que l'alimentation, i.e. les réseaux filaires, d'échanger des données avec les appareils connectés. Ainsi, par multiplexage des données et de l'alimentation électrique au sein d'une même infrastructure réseau, il est possible d'alimenter les appareils connectés et de communiquer en outre avec ces derniers.

Il convient de noter qu'on entend par appareil connecté tout type d'équipement brun alimenté en courant faible et continu. A titre purement illustratif, ces appareils connectés sont au moins : des équipements multimédias (télévision, tablette numérique, téléphone, Smartphone, ou autre), des objets connectés (capteur, lampe LED, etc.) ou toute autre équipement alimenté selon un courant continu. Optionnellement, ces appareils connectés sont aptes à échanger des données via leur branchement d'alimentation (connexion avec le réseau filaire) et/ou via une interface de communication sans fil (Wifi, Bluetooth, ou autre).

Selon un mode de réalisation particulièrement avantageux, le courant faible est caractérisé par une alimentation électrique de puissance inférieure ou égale à 100 Watts. Les appareils connectés précités requièrent généralement une puissance électrique allant de quelques Watts à une centaine de Watts. Aussi, l'alimentation fournie par le tableau électrique est avantageusement une puissance électrique en courant continue inférieure à 100 Watts pour alimenter les appareils connectés selon une puissance prescrite, typiquement de 15, 30, 60 ou 90 Watts.

A cet effet, avant d'initier l'alimentation de l'appareil, une requête de l'unité de traitement électrique peut être prévue à l'attention de l'appareil connecté pour connaître précisément la puissance prescrite à fournir à l'appareil. Cette requête peut être réalisée d'une part via les réseaux filaires, et d'autre part, via une interface de communication sans fil, comme détaillé plus loin. On comprendra que les disjoncteurs, ou tout autre composant électrique de type régulateur, peuvent être prévus de sorte à moduler la puissance électrique à fournir sur les réseaux filaires.

En complément ou en variante, l'unité de traitement électronique est associée à au moins un disjoncteur de la pluralité de disjoncteurs et l'unité est en outre adaptée à collecter des données d'au moins un capteur de courant couplé à l'au moins un disjoncteur. Le capteur est adapté à mesurer un courant de sortie de disjoncteur et une différence de potentiel. Le capteur de courant permet de suivre la consommation d'un départ, participant à l'affinement du suivi de consommation des appareils connectés au tableau. Le consommateur peut suivre avec une bonne granularité la consommation inhérente à ses appareils connectés.

Avantageusement, le tableau comporte en outre un moyen de stockage d'archives des données collectées par l'unité de traitement électronique. De la sorte, le tableau électrique permet de conserver localement les données de mesure en consommation électrique des appareils connectés, ceci pour une utilisation et un suivi à la discrétion du consommateur depuis son logement ou un accès à distance.

Dans un mode de réalisation avantageux, le tableau électrique comporte en outre une interface de communication destinée à communiquer les données collectées par l'unité de traitement électronique.

L'interface de communication peut être par exemple :
- un canal Ethernet pour communiquer avec un boîtier d'opérateur télécom pour un transfert des données collectées vers l'extérieur,
- un canal Wifi pour une consultation locale des données par le consommateur au moyen des appareils connectés ou autres dispositifs communicants munis d'un logiciel adapté,
- un canal radio pour recueillir des informations complémentaires dans l'installation,
- ou autre.

De cette manière, le consommateur peut consulter facilement les données de consommation de ces appareils connectés et optimiser sa consommation en fonction de telles données.

En variante ou en complément, le tableau électrique comporte en outre une connexion d'accès à une passerelle vers un réseau de communication étendu, l'unité de traitement électronique étant connectée à la connexion d'accès pour communiquer des données avec le réseau de communication étendu. Le réseau de communication étendu peut être un réseau de type internet. Les données de consommation peuvent ainsi être consultées à distance via un accès au réseau étendu, comme par exemple à partir d'un Smartphone muni d'un navigateur et d'une connexion à internet. Pour une sécurisation des données stockées dans le tableau électrique, il peut être prévu des moyens d'authentification et/ou d'encodage crypté.

En outre, selon la connexion d'accès et/ou l'interface de communication, le tableau électrique peut télécharger des données d'applications logicielles auprès d'une plateforme de services sur requête du consommateur, des unités de traitement et/ou des appareils connectés au tableau. Ces applications logicielles mises en oeuvre par les unités et/ou appareils, sont par exemple relatives à de nouvelles fonctionnalités de gestion d'énergie, une assistance à l'optimisation de la consommation ou autre service à valeur ajoutée pour le consommateur. Dans une autre réalisation possible, les données de consommation peuvent être envoyées à un serveur distant, typiquement le serveur d'un fournisseur d'énergie. Le fournisseur d'énergie a alors connaissance du comportement précis de consommation de l'abonné, et peut ajuster la fourniture d'énergie électrique pour ce consommateur ou, tout au moins, à un groupe de consommateurs dont il fait partie.

Selon un mode réalisation particulièrement avantageux, les réseaux filaires opèrent selon un protocole de type Ethernet en fournissant une alimentation électrique selon la norme IEEE 802.3af via le tableau électrique. Cette norme est aussi nommée « PoE » ou « Power over Ethernet » pour alimentation électrique sur Ethernet. Elle consiste à alimenter en courant continu, à une tension de l'ordre de 48 Volts, des appareils connectés par liaison Ethernet. La puissance peut être fournie dans une gamme comprise entre 1 et 100 Watts, et plus particulièrement pour des puissances de 15, 30, 60 et 90 Watts, voire plus. Ces puissances répondent aux critères de tension, courant et puissance, d'alimentations prescrites pour la majorité des appareils.

Outre l'alimentation, le protocole Ethernet est largement répandu pour l'échange de données entre dispositifs communicants. Le protocole Ethernet selon la norme PoE est donc approprié pour véhiculer des données numériques avec les appareils connectés aux réseaux filaires du tableau électrique et à l'alimentation électrique de ces appareils connectés.

Selon un mode réalisation, l'alimentation électrique reçue en provenance de la source électrique est une alimentation selon un courant continu. Dans une première réalisation possible, la source électrique est au moins une première source autonome d'énergie électrique à courant continu parmi :
- un panneau photovoltaïque ;
- une éolienne ;
- une pile à combustible ;
- une batterie de véhicule électrique ;
- ou autre.

Ainsi, le tableau électrique reçoit une alimentation électrique en provenance d'une source d'énergie électrique alternative. Cette alimentation électrique est transmise aux appareils connectés de manière sécurisée via les disjoncteurs associés aux départs. La production électrique de la source d'énergie alternative peut ainsi être directement exploitée par les appareils connectés.

En variante ou en complément, la source électrique est en outre au moins une deuxième source autonome d'énergie électrique à courant continu de type onduleur électrique. L'onduleur stocke une énergie électrique dont il peut se décharger au besoin pour alimenter une entité électrique telle que le présent tableau électrique. Aussi, dès lors que la première source d'énergie électrique ne fournit plus d'énergie au tableau, l'onduleur peut fournir une énergie nécessaire au fonctionnement du tableau et, in fine, à l'alimentation des appareils connectés.

Selon une autre variante ou en complément, l'alimentation électrique reçue en provenance de la source électrique est en outre une alimentation selon un courant alternatif. Pour ce faire, il convient que le tableau électrique comprenne en outre un convertisseur de courant alternatif en courant continu, installé en intermédiaire entre la connexion d'alimentation et les un ou plusieurs départs. Ainsi, avec un seul et même convertisseur dans le tableau, il est possible d'alimenter directement les appareils connectés en courant continu, et ce à partir d'une source électrique initiale en courant alternatif.

La source électrique courant fort peut être typiquement un tableau électrique courant fort ou un compteur courant fort de l'installation électrique du consommateur. De cette manière, le présent tableau électrique peut s'intégrer à une infrastructure électrique préexistante d'un logement et recevoir son alimentation via le tableau ou le compteur préinstallé.

Par ailleurs, il convient de noter qu'une quelconque combinaison des sources électriques à courant faible continu et/ou à courant fort alternatif peut être envisagée pour l'alimentation électrique du présent tableau électrique.

En complément ou en variante, l'unité de traitement électronique est adaptée à transmettre, sur requête, des données collectées et archivées au sein du moyen de stockage. Ainsi, le consommateur peut accéder à ses données de consommation enregistrées en local, et ce même à distance avec un accès par l'intermédiaire de l'interface de communication et/ou de l'unité de traitement électronique.

Avantageusement, le tableau électrique comprend en outre une source de puissance autonome apte à stocker au moins une partie de l'énergie électrique reçue par la connexion d'alimentation, en provenance d'au moins une source électrique précitée. La source de puissance autonome est par exemple une batterie apte à stocker une énergie électrique en courant continu et/ou alternatif. Lorsqu'une coupure d'alimentation en provenance de la source électrique survient, la source de puissance autonome permet au tableau d'une part, de fournir une alimentation à l'unité de traitement électronique pour envoyer un message d'alerte au consommateur et, d'autre part, de continuer à alimenter au moins temporairement, selon un mode dégradé, les appareils connectés.

Dans une réalisation possible, un dispositif communiquant d'un utilisateur peut communiquer via l'interface de communication du tableau, des instructions et/ou notifications avec les appareils connectés. De cette manière, l'utilisateur, en l'occurrence le consommateur, peut recevoir par exemple sur son Smartphone des notifications d'alertes ou d'informations en provenance des appareils connectés au tableau électrique. Il peut aussi envoyer des instructions de fonctionnement, de paramétrage et/ou de mise à jour des appareils connectés.

On comprendra que le tableau électrique est une plateforme intermédiaire entre la source électrique précitée et les appareils connectés, permettant un fonctionnement :
- sécurisé électriquement eu égard de la présence de disjoncteurs en association avec les départs,
- simplifié avec un même réseau filaire pour transmettre par multiplexage, à la fois des données et une énergie électrique adaptée aux appareils connectés,
- sécurisé en échange de données, les données de consommations étant enregistrées en local dans le tableau électrique.

D'autres caractéristiques et avantages de l'invention apparaîtront à l'examen de la description détaillée ci-après, et des dessins annexés sur lesquels :
- la figure 1 illustre un exemple de représentation d'un tableau électrique selon l'invention ;
- la figure 2 représente un exemple d'installation électrique de consommateur comprenant le tableau électrique et une source électrique à courant continu ; et
- la figure 3 représente l'exemple d'installation électrique précédent avec une source électrique à courant continu ou alternatif.

Pour des raisons de clarté, les dimensions des différents éléments représentés sur ces figures ne sont pas nécessairement en proportion avec leurs dimensions réelles. Sur les figures, des références identiques correspondent à des éléments identiques.

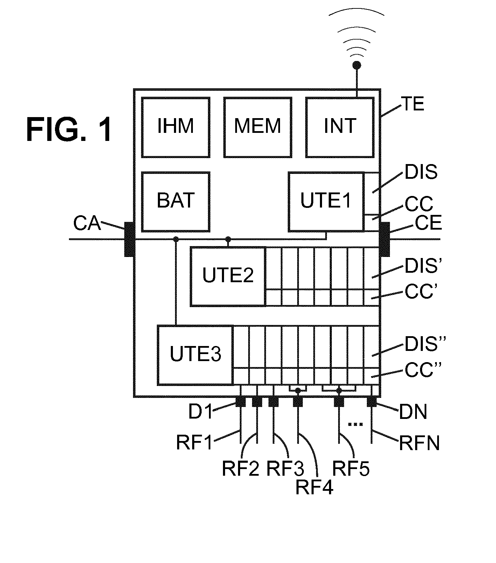

On se réfère tout d'abord à la figure 1 sur laquelle on a illustré une représentation d'un exemple du tableau électrique TE. Le tableau TE comprend des rangées de disjoncteurs DIS, DIS', DIS", chacune des rangées comprenant au moins un disjoncteur. A la rangée basse de disjoncteurs DIS", on a représenté des départs D1 à DN avec lesquels un ou plusieurs disjoncteurs sont associés.

Chacun des départs est quant à lui associé à un réseau filaire numérique RF1 à RFN. Comme détaillé dans l'exposé des prochaines figures, un ou plusieurs appareils peuvent être connectés à chacun des réseaux filaires RF1 à RFN. Les réseaux filaires numériques sont adaptés à la fois à la transmission de données numériques avec des appareils connectés et à l'alimentation électrique de ces appareils. Typiquement, les réseaux filaires sont des câbles Ethernet fournissant une alimentation électrique de type « PoE ». Dans cet exemple, la connexion entre un des départs D1 à DN et un des réseaux filaires RF1 à RFN peut être réalisée par l'intermédiaire d'une coopération de ports RJ45 mâle et femelle. A l'autre extrémité des réseaux filaires, les appareils sont connectés selon une coopération analogue.

De manière connue en soi, chaque disjoncteur est adapté à interrompre le courant électrique délivré à une partie des réseaux filaires en cas de courant de surcharge ou en cas de court-circuit sur une partie des réseaux filaires, assurant ainsi une protection des personnes en détectant les fuites de courant à la terre dans ces réseaux, et préservant par la même l'installation électrique.

Pour des raisons de clarté de la figure, seuls les départs D1 à DN de la rangée basse de disjoncteurs DIS" ont été représentés. On comprendra toutefois que des départs pour chacun des disjoncteurs ou pour des groupes de disjoncteurs du tableau électrique TE peuvent être prévus, comme par exemple aux rangées DIS et DIS'.

Le tableau électrique TE comporte une connexion d'alimentation CE d'entrée (nommée connexion d'entrée CE par la suite). L'alimentation électrique qui y est reçue est en provenance d'une source électrique représentée aux figures suivantes. La connexion d'entrée CE est prévue pour alimenter les disjoncteurs. Les disjoncteurs relaient, voire transforment l'alimentation reçue en une alimentation de courant faible et continu. A titre d'exemple, l'alimentation électrique en sortie du tableau, i.e. au niveau des départs D1 à DN, se caractérise par :
- une tension de 48 Volts ;
- un courant faible et continu, typiquement inférieur ou égal à 2 A ; et
- une puissance électrique inférieure ou égale à 100 Watts.

Afin de réguler l'alimentation à délivrer aux appareils connectés via les réseaux filaires RF1 à RFN, les disjoncteurs sont aptes à régler l'alimentation électrique en tension et/ou en courant sur les réseaux filaires associés. Dans une autre réalisation possible, un régulateur en tension et en courant est prévu à cet effet, lequel régulateur est connecté électriquement aux disjoncteurs. Comme décrit ci-après, des unités de commande sont prévues pour contrôler la régulation de l'alimentation via les disjoncteurs ou les régulateurs.

Chacun des disjoncteurs est couplé à un capteur de courant adapté à mesurer un courant de sortie de disjoncteur et une différence de potentiel. Conformément aux disjoncteurs, les capteurs de courant sont organisés en rangées de capteurs de courants CC, CC', CC". En outre, une unité de traitement électronique est associée à chacune des rangées comprise dans le tableau. Les unités de traitement sont reliées électriquement aux départs D1 à DN pour envoyer et recevoir des données numériques des réseaux filaires RF1 à RFN.

Ici, les unités de traitement UTE1, UTE2 et UTE3 sont respectivement associées aux rangées de disjoncteurs DIS, DIS', DIS". Les unités de traitement électronique sont par ailleurs aptes à collecter et interpréter les données issues des capteurs de courants couplés aux disjoncteurs.

En outre, les unités de traitement peuvent être prévues comme unité de commande pour la régulation de l'alimentation délivrée aux départs D1 à DN. A titre purement illustratif, l'unité de traitement UTE3 peut par exemple contrôler le disjoncteur ou le régulateur associé au départ D1 pour que l'alimentation électrique d'un appareil connecté du réseau RF1 soit d'une puissance de 15, 30, 60 voire 90 Watts.

Les données collectées et interprétées par les unités de traitement électronique sont des mesures du courant en sortie de disjoncteur et une différence de potentiel pour déterminer les consommations électriques sur le réseau filaire du départ associé au disjoncteur. En outre, tout défaut électrique survenant dans une partie des réseaux filaires est détectée par les unités de traitement UTE1, UTE2, UTE3 au moyen des capteurs de courant des rangées CC, CC' et CC". Le défaut peut être localisé dans l'installation en fonction du disjoncteur associé.

Les unités de traitement électronique UTE1, UTE2, UTE3 sont prévues pour communiquer des données numériques avec les appareils connectés, ceci via les réseaux filaires RF1 à RFN associés aux disjoncteurs des rangées DIS, DIS', DIS". Les données échangées peuvent être relatives à tout type de contenu numérique lisible par les appareils connectés : instructions, données voix, données images ou autre.

Le tableau électrique comporte un moyen de stockage MEM d'archives des données collectées, communiquées ou mesurées par les unités de traitement UTE1, UTE2, UTE3. Ce moyen de stockage peut être tout support apte à enregistrer des données numériques de manière durable, non volatile et pérenne, préférentiellement non mécanique et à haute résistance au bruit, avec un accès rapide en lecture/écriture aux données stockées. A titre d'exemple, un tel moyen de stockage peut être un disque SSD à mémoire flash. Les unités de traitement commandent le stockage des données et sécurisent les données stockées via des moyens d'authentification et/ou d'encodage crypté.

On comprend que le tableau électrique TE constitue ainsi une « boîte noire » des usages électriques des appareils connectés. D'une part, les capteurs de courant recueillent des informations relatives à la consommation de chaque appareil ou groupe d'appareils à un disjoncteur donné via un réseau filaire. D'autre part, les unités de traitement électronique UTE1, UTE2, UTE3 collectent et archivent ces données. Le consommateur peut alors choisir de la manière dont il dispose de ces informations collectées et archivées. Ces données des appareils sont intégrées dans l'historique des usages et peuvent ensuite servir au besoin à reconstituer précisément les événements survenus dans le logement.

Les mesures en courant de chaque disjoncteur du tableau électrique permettent de recueillir des informations de consommation détaillées. Ces informations permettent au consommateur de se sensibiliser, de gérer et d'optimiser sa consommation d'énergie dans le logement et d'avoir accès à un bilan détaillé de la consommation électrique inhérente aux appareils connectés.

Avant de débuter une alimentation d'appareil, une requête de l'unité de traitement électrique est prévue à l'attention de l'appareil se connectant afin de connaître la puissance prescrite à laquelle l'appareil doit être alimenté. Ainsi, l'unité de commande correspondante contrôle le disjoncteur ou le régulateur pour adapter la puissance à délivrer à l'appareil connecté. Ce dernier fonctionne alors de manière optimale.

Par ailleurs, lorsque l'appareil est déconnecté, il est prévu d'envoyer un message d'alerte à l'unité de traitement électronique correspondante de sorte à couper, via le disjoncteur par exemple, l'alimentation sur le réseau filaire dorénavant inutilisé jusqu'à la prochaine connexion d'un appareil.

Le tableau comporte également une interface de communication INT destinée à communiquer les données collectées par l'unité de traitement électronique. Une telle interface de communication peut être :
- une interface Ethernet ;
- une interface radio ;
- une interface WiFi ; ou
- toute autre interface permettant au consommateur de consulter les informations collectées et archivées et/ou permettant un transfert de ces informations vers une unité de traitement distante, par exemple un serveur distant ou un coffre fort électronique.

Typiquement, les données collectées et archivées dans la mémoire du tableau TE peuvent être dupliquées automatiquement dans un coffre fort électronique sécurisé avec une fréquence déterminée selon un paramétrage du consommateur.

Le tableau comporte également une connexion d'accès CA à un réseau de communication. Via la connexion d'accès CA, les unités de traitement électronique peuvent d'une part envoyer et recevoir des données sur requête du consommateur ou des appareils connectés, ceci afin d'obtenir des applications logicielles auprès d'une plateforme de services par exemple. D'autre part, selon une autre réalisation possible, les unités de traitement peuvent envoyer des données sur requête d'un serveur de fournisseur d'énergie, notamment pour rendre compte de la consommation effective ou à venir des appareils connectés.

Le tableau électrique peut comporter une interface homme-machine IHM pour consulter les données de consommation stockées en local sur le moyen de stockage MEM ou pour paramétrer le tableau électrique TE. Typiquement, via l'interface IHM, le consommateur peut envoyer des instructions de commande à l'unité de traitement électronique pour régler la puissance et la durée des alimentations électriques aux départs du tableau TE.

Le tableau électrique TE peut également disposer d'un port USB (non représenté sur la figure) pour permettre une mise à jour et/ou une maintenance des logiciels de l'unité de traitement électronique. Le paramétrage de l'unité électronique peut également être réalisé par le consommateur à l'aide d'un dispositif communiquant en Wifi (tablette, PC, Smartphone ou autre) munis d'un logiciel adapté.

Le tableau électrique TE permet à un consommateur de contrôler ses usages électriques et de conserver un historique de ces usages. Par exemple, les données collectées par les capteurs de courant et archivées dans la mémoire MEM du tableau TE peuvent être consultées par le consommateur et transmises vers l'extérieure sur requête du consommateur. La requête de transmission vers l'extérieure des données collectées peut être ponctuelle ou le fait d'un paramétrage par le consommateur, pour une sauvegarde régulière des données par exemple. Les usages électriques du consommateur sont ainsi conservés à l'extérieur du logement et reconstitués, par exemple pour assister le consommateur dans l'optimisation de sa consommation électrique et/ou pour aider à établir des causes de défaillances en cas de sinistre.

Selon un mode de réalisation, les unités de traitement électronique peuvent en outre être paramétrées pour détecter des anomalies de fonctionnement à partir des données collectées, notamment le déclenchement d'un disjoncteur et/ou le non fonctionnement d'un appareil connecté. Le cas échéant, l'unité de traitement électronique peut émettre une alerte à l'attention du consommateur via l'interface de communication INT.

Outre, l'optimisation de la consommation du consommateur, le tableau électrique peut permettre de gérer la charge des appareils électriques. En ce sens, le consommateur peut régler à distance, ou au préalable sur l'interface IHM, une plage horaire au cours de laquelle un appareil doit être rechargé à une puissance donnée. Ainsi, la batterie ou le circuit d'alimentation de l'appareil connecté n'est pas endommagé par une suralimentation ou une surchauffe prolongée inhérente à une charge. La durée de vie et le fonctionnement des appareils connectés en sont améliorés.

Par ailleurs, le tableau électrique permet de proposer de nouveau service à valeur ajoutée de type domotique en collaboration avec les appareils connectés aux réseaux filaires RF1 à RFN. Typiquement, lors d'une recharge de sa tablette numérique à son domicile via un réseau filaire Ethernet, le consommateur peut demander à distance à ce que les données images de la caméra de la tablette lui soient retransmises sur son Smartphone. Ainsi, la tablette peut lui permette de surveiller son domicile à distance.

De surcroît, les données enregistrées en local permettent de mettre en oeuvre, in situ avec les unités de traitement électronique, ou à distance avec un serveur extérieur, un apprentissage du comportement de consommation du consommateur pour une meilleure gestion de l'énergie.

L'unité de traitement électronique peut abritée un serveur web en local à partir duquel les usagers se connectent via des applications logicielles, par exemple sur des dispositifs communicants tels que les Smartphones, tablettes numériques ou autre. Ces applications logicielles peuvent proposées notamment des interfaces de contrôle et/ou de présentation des données de consommation.

Lorsque le tableau électrique TE comprend une pluralité d'unités de traitement électroniques UTE1, UTE2, UTE3, comme illustré sur les figures, une des unités est choisie comme unité maitre. Cette unité maitre peut collecter les données provenant des appareils connectés et/ou rassembler l'ensemble des données collectées par les autres unités de traitement électroniques du tableau. En cas de défaillance de l'unité maitre, une autre des unités de traitement électronique du tableau peut être élue comme unité maitre selon des procédés de communication entre unités électroniques connus en soi.

Le tableau électrique comprend en outre une source de puissance autonome BAT, telle qu'une batterie, stockant une partie de l'énergie électrique reçue par la connexion d'entrée CE, en provenance d'au moins une source électrique. L'énergie stockée dans la source BAT permet au tableau électrique de :
- alimenter les unités de traitement électronique UTE1, UTE2, UTE3 et l'interface de communication INT pour envoyer un message d'alerte au consommateur, et
- alimenter partiellement les appareils connectés.

Typiquement, en cas de perte totale des alimentations en provenance de la source électrique, avec passage sur batterie, un premier message peut être envoyé sur l'une des interfaces du consommateur et un second message peut être envoyé à l'unité de traitement électronique du tableau électrique TE.

En outre, une priorité d'alimentation peut être prédéterminée afin que certains appareils soient alimentés en priorité lors de coupure d'alimentation à la connexion d'entrée CE. A titre purement illustratif, il peut être prévu que les appareils connectés en lien avec la sécurité du logement (alarme, détecteur de mouvement, etc.) soient les premiers alimentés au moins temporairement lors d'un passage sur batterie du tableau.

Chaque unité de traitement électronique est paramétrée pour détecter des anomalies dans les données récoltées des appareils connectés. Elle peut alors envoyer des alertes au consommateur ou à un tiers paramétré sur déclenchement d'événements qui peuvent être :
- déclenchement d'un disjoncteur, sur défaut de court circuit ou surintensité,
- défaut de non fonctionnement d'un équipement : lampe LED, tablette numérique, capteur ou autre ;
- déclenchement de l'alarme intrusion,
- défaut de qualité de l'air, de température, d'humidité, de fuite d'eau ou autre ;
- alerte d'inactivité (surveillance d'une personne âgée par exemple).

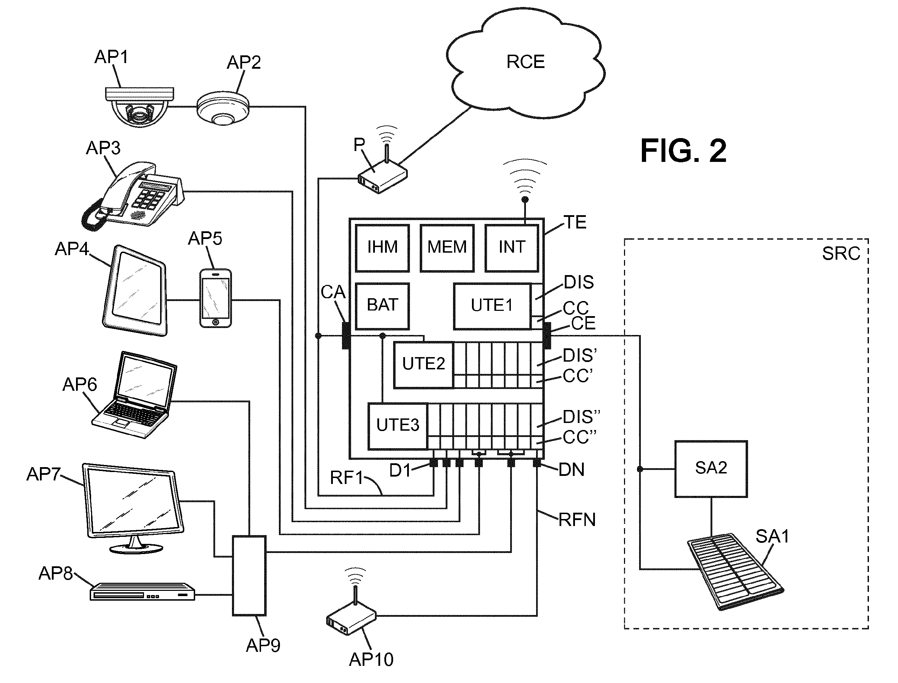

On se réfère maintenant à la figure 2 sur laquelle on a représenté un exemple d'installation électrique comprenant le compteur électrique TE. D'une part, le compteur électrique TE est connecté à une source électrique SRC via sa connexion d'entrée CE. D'autre part, par l'intermédiaire des réseaux filaires RF1 à RFN des départs D1 à DN, le compteur électrique est relié aux appareils connectés suivants :
- équipements de surveillance AP1, AP2 (détecteur de mouvement, capteur de température, caméra, etc.) ;
- équipements communicants AP3, AP4, AP5 (téléphone, Smartphone, tablette numérique, etc.) ;
- équipements bureautiques AP6 (ordinateur, imprimante, scanner, etc.) ;
- équipements multimédias AP7, AP8 (télévision connectée, lecteur de médias, etc.) ;
- équipements réseau et/ou électrique AP9, AP10 (relai WiFi, multiprise Ethernet, éclairage LED, etc.) ;
- ou autre.

La source électrique SRC fournit une alimentation en courant continu au tableau TE. Cette alimentation est générée par :
- une première source autonome d'énergie électrique SA1, en l'occurrence ici, un panneau photovoltaïque ;
- une deuxième source autonome d'énergie électrique SA2 tel qu'un onduleur électrique, apte à stocker de l'énergie électrique issue du panneau photovoltaïque par exemple.

Le tableau électrique TE reçoit l'alimentation électrique en provenance de la première source SA1 et/ou de la deuxième source SA2. Cette alimentation électrique est transmise aux appareils connectés de manière sécurisée via les disjoncteurs des rangées associés aux départs D1 à DN.

Le tableau électrique TE comporte en outre la connexion d'accès CA à une passerelle P vers un réseau de communication étendu RCE. Les unités de traitement électronique UTE1, UTE2, UTE3 sont connectées à la connexion d'accès CA pour communiquer des données avec le réseau étendu RCE. La passerelle P peut être alimentée électriquement via un réseau filaire, comme le réseau RF1, au même titre que les appareils connectés AP1 à AP10. La connexion CA permet en outre de recevoir les données échangées avec le réseau étendu RCE.

Les unités de traitement UTE1, UTE2, UTE3 électronique sont adaptées à transmettre au réseau étendu RCE, sur requête, des données collectées et archivées au sein du moyen de stockage MEM.

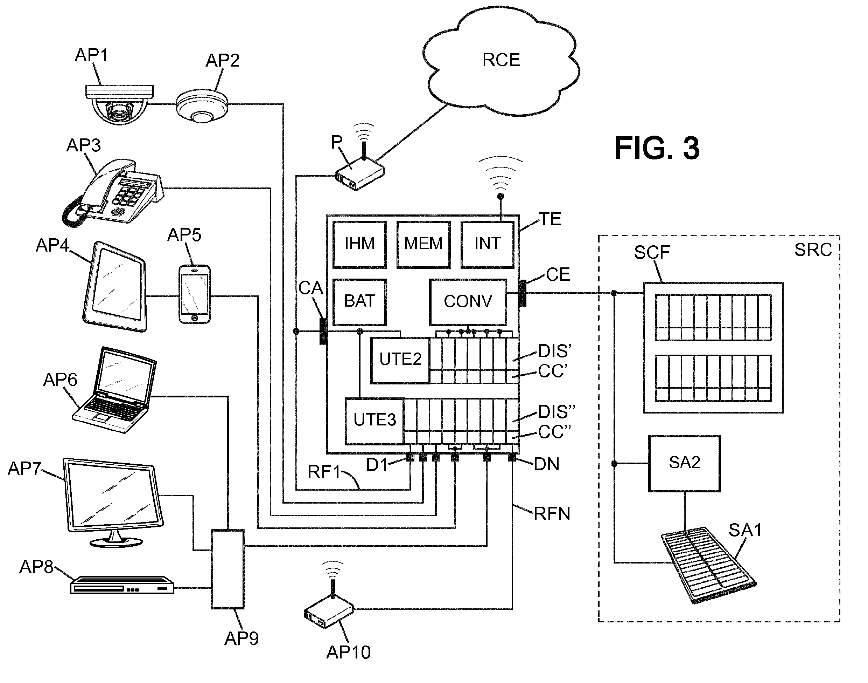

A la figure 3, on a représenté un autre exemple d'installation comprenant le tableau électrique TE. La source électrique SRC comprend, outre les premières et deuxièmes sources alternatives SA1, SA2, une source en courant fort SCF, telle qu'un tableau électrique courant fort par exemple. L'alimentation électrique reçue en provenance de la source courant fort SRC est en courant alternatif, avec une tension comprise entre 200 et 250 Volts. Dans ce cas d'espèce, le tableau électrique TE comprend un convertisseur CONV de courant alternatif en courant continu (convertisseur AC/DC), installé en intermédiaire entre la connexion d'entrée CE et les départs D1 à DN. A titre d'exemple, le convertisseur CONV est prévu pour convertir une alimentation d'entrée alternative de 220 à 240 Volts, en une alimentation de sortie continue de 48 Volts, voire sensiblement supérieure à 48 Volts. Ainsi, le tableau électrique peut être alimenté par la source électrique SRC selon une quelconque combinaison de sources à courant faible continu et/ou à courant fort alternatif. Le convertisseur CONV est prévu pour transformer uniquement une composante électrique alternative de l'alimentation en provenance de la source SRC.

Par ailleurs, le consommateur peut communiquer via ladite interface de communication INT des instructions et/ou notifications avec lesdits appareils connectés AP1 à AP10. De cette manière, le consommateur peut recevoir des notifications d'alertes ou d'informations en provenance des appareils connectés au tableau électrique. Il est aussi possible de communiquer des instructions relatives au fonctionnement, au paramétrage et/ou la mise à jour des appareils connectés.

Le consommateur peut ainsi gérer de manière personnalisée ses usages électriques et conserver de manière sécurisée un historique de données liées à ses appareils. Le tableau électrique selon l'invention est le coeur d'une plateforme de service pour la communication, l'alimentation et l'optimisation d'utilisation des appareils du consommateur.

On comprendra que le tableau électrique TE est interopérable avec tout type d'appareil connecté pouvant communiquer selon le protocole Ethernet ou, tout ou moins, pouvant être alimenté par PoE (norme IEEE 802.3af).

Il convient de noter que de plus en plus de logements disposent d'une infrastructure complète en Ethernet. Aussi, le tableau électrique permet de se greffer sur une infrastructure existante et d'y apporter une alimentation multiplexé avec une communication de données, ceci de manière sécurisée. Le tableau électrique regroupe les moyens de mesures en consommation et ne nécessite pas dans le logement l'installation d'un moyen de mesure par appareils de l'utilisateur.

Bien entendu, la présente invention ne se limite pas à la forme de réalisation décrite ci-avant à titre d'exemple et elle s'étend à d'autres variantes. A ce titre, selon un autre mode de réalisation, le tableau électrique est intégré à un tableau électrique courant fort afin que l'installation électrique ne comporte qu'un seul dispositif central auquel sont connectés les réseaux filaires et le reste de l'infrastructure électrique du logement.

## Revendications

1. Tableau électrique (TE), comportant au moins :
- une pluralité de disjoncteurs, chacun des disjoncteurs étant relié à :
o une connexion d'alimentation (CE) pour recevoir une alimentation électrique en provenance d'une source électrique (SRC) ;
o un ou plusieurs départs (D1...DN) vers des réseaux filaires numériques (RF1...RFN) de communication et d'alimentation électrique, lesquels réseaux filaires sont adaptés à la fois à la transmission de données numériques avec des appareils connectés (AP1...AP10) auxdits réseaux filaires et à l'alimentation électrique desdits appareils connectés ; et
- une unité de traitement électronique (UTE1, UTE2, UTE3) reliée aux disjoncteurs et adaptée pour envoyer et recevoir sur les départs (D1...DN) des données numériques desdits réseaux filaires (RF1...RFN) ;
- dans lequel les disjoncteurs alimentent électriquement les réseaux filaires (RF1...RFN) selon un courant faible et continu.

2. Tableau électrique (TE) selon la revendication 1, dans lequel ledit courant faible est **caractérisé par** une alimentation électrique de puissance inférieure ou égale à 100 Watts.

3. Tableau électrique (TE) selon l'une des revendications 1 ou 2, dans lequel ladite unité de traitement est adaptée pour émettre une requête de puissance prescrite auxdits appareils électriques, ledit courant faible étant modulé en puissance selon la puissance prescrite desdits appareils électriques.

4. Tableau électrique (TE) selon l'une quelconque des revendications précédentes, dans lequel ladite unité de traitement électronique (UTE1, UTE2, UTE3) est associée à au moins un disjoncteur de ladite pluralité de disjoncteurs, et est en outre adaptée à collecter des données d'au moins un capteur de courant couplé audit au moins un disjoncteur associé, le capteur étant adapté à mesurer un courant de sortie de disjoncteur et une différence de potentiel.

5. Tableau électrique (TE) selon la revendication 4, comportant en outre un moyen de stockage (MEM) d'archives desdites données collectées par l'unité de traitement électronique (UTE1, UTE2, UTE3).

6. Tableau électrique (TE) selon l'une des revendications 4 ou 5, comportant en outre une interface de communication (INT) destinée à communiquer lesdites données collectées par l'unité de traitement électronique (UTE).

7. Tableau électrique (TE) selon l'une quelconque des revendications précédentes, comportant en outre une connexion d'accès (CA) à une passerelle (P) vers un réseau de communication étendu (RCE), ladite unité de traitement électronique (UTE1, UTE2, UTE3) étant connectée à ladite connexion d'accès (CA) pour communiquer des données avec ledit réseau étendu (RCE).

8. Tableau électrique (TE) selon l'une quelconque des revendications précédentes, dans lequel les réseaux filaires opèrent selon un protocole de type Ethernet en fournissant une alimentation électrique selon la norme IEEE 802.3af.

9. Tableau électrique (TE) selon l'une quelconque des revendications précédentes, dans lequel ladite alimentation électrique reçue en provenance de la source électrique est une alimentation selon un courant continu.

10. Tableau électrique (TE) selon la revendication 9, dans lequel ladite source électrique est au moins une première source autonome (SA1) d'énergie électrique à courant continu parmi :
- un panneau photovoltaïque ;
- une éolienne ;
- une pile à combustible ; ou
- une batterie de véhicule électrique.

11. Tableau électrique (TE) selon les revendications 9 ou 10, dans lequel ladite source électrique est au moins une deuxième source autonome (SA2) d'énergie électrique à courant continu de type onduleur électrique.

12. Tableau électrique (TE) selon l'une quelconque des revendications précédentes, dans lequel ladite alimentation électrique reçue en provenance de la source électrique (SRC) est en outre une alimentation selon un courant alternatif, le tableau électrique (TE) comprenant en outre un convertisseur (CONV) de courant alternatif en courant continu, installé en intermédiaire entre ladite connexion d'alimentation (CE) et lesdits un ou plusieurs départs (D1...DN).

13. Tableau électrique (TE) selon la revendication 12, dans lequel ladite source électrique (SRC) est une source électrique courant fort (SCF) à courant alternatif, de type tableau électrique courant fort ou compteur électrique courant fort.

14. Tableau électrique (TE) selon l'une quelconque des revendications précédentes, comprenant en outre une source de puissance autonome (BAT) apte à stocker au moins une partie de l'énergie électrique reçue par ladite connexion d'alimentation (CE).

15. Tableau électrique (TE) selon l'une quelconque des revendications précédentes, dans lequel, via ladite interface de communication (INT), un dispositif communicant d'un utilisateur communique des instructions et/ou notifications avec lesdits appareils connectés (AP1...AP10).
